# FASCICULE DE BREVET EUROPEEN

(11) **EP 0 461 022 B1**
(45) Date de publication et mention de la délivrance du brevet: **20.09.1995**
(21) Numéro de dépôt: 91401453.5
(22) Date de dépôt: 04.06.1991
(51) Int. Cl.: H04L 27/22

(54) **Dispositif de récupération d'une onde porteuse muni d'un moyen d'inhibition de faux accrochages en fréquence**
Einrichtung zur Trägerrückgewinnung mit Mittel zum Verhindern falscher Frequenzverriegelung
Apparatus for carrier recovery with means for preventing a false frequency lock

(30) Priorité: 06.06.1990 FR 9007010
(43) Date de publication de la demande: 11.12.1991
(73) Titulaire: FRANCE TELECOM, 92131 Issy les Moulineaux (FR)
(72) Inventeur: Labat, Joel, F-29213 Plougastel Daoulas (FR); Vandamme, Patrick, F-22700 Perros-Guirec (FR)
(74) Mandataire: Dubois-Chabert, Guy

(56) Documents cités:
- EP-A- 0 072 241
- FR-A- 2 552 959

## Description

L'invention concerne un dispositif de récupération d'une onde porteuse muni d'un moyen d'inhibition de faux accrochages en fréquence pour des signaux numériques modulés en phase.

Elle trouve une application en transmission numérique et plus particulièrement dans le cas où, après avoir été transmise par modulation d'une onde électromagnétique, une information est restituée par démodulation cohérente.

Le domaine d'application de l'invention est donc très large et couvre des modems de transmission de données, les faisceaux hertziens, les systèmes des communications spatiales, voire l'optique (dans le cas des liaisons hétérodynes).

La démodulation d'une onde suppose de la part du récepteur qui la met en oeuvre, la connaissance de la fréquence et de la phase de l'onde porteuse d'émission.

A cette fin, une onde de démodulation est engendrée par un oscillateur commandable en tension (OCT), la tension de commande de cet oscillateur est fournie par un comparateur de phase qui délivre une tension d'erreur fonction de l'écart de phase Φ entre l'onde porteuse modulée et l'onde engendrée par l'oscillateur.

Compte tenu du fait que l'onde porteuse d'émission peut être modulée en amplitude et/ou en phase, la structure du comparateur de phase dépend de la modulation utilisée.

La récupération de l'onde porteuse par la boucle à verrouillage de phase nécessite tout d'abord que l'oscillateur ait une fréquence proche de l'onde modulée reçue. Ceci étant réalisé par comparaison de phase entre l'onde modulée reçue et l'onde délivrée par l'oscillateur, la fréquence de l'onde de l'oscillateur est modifiée continûment jusqu'à atteindre la fréquence de l'onde modulée.

Cette phase dite d'acquisition ou d'accrochage en fréquence n'est pas garantie dans les dispositifs utilisés classiquement pour la récupération de l'onde porteuse d'un signal modulé numériquement.

En effet, il arrive que des faux accrochages en fréquence surviennent, et cela précisément lorsque l'écart entre la fréquence porteuse et la fréquence de l'oscillateur local de réception est un multiple entier de la moitié de la rapidité de modulation.

Ce phénomène est courant lorsque les débits numériques sont faibles et lorsque la dérive des oscillateurs, associée à un éventuel effet doppler (dans le cas des transmissions par satellite), exige une plage d'acquisition importante. C'est le cas par exemple du système de transmission du type IMMARSAT STANDARD C.

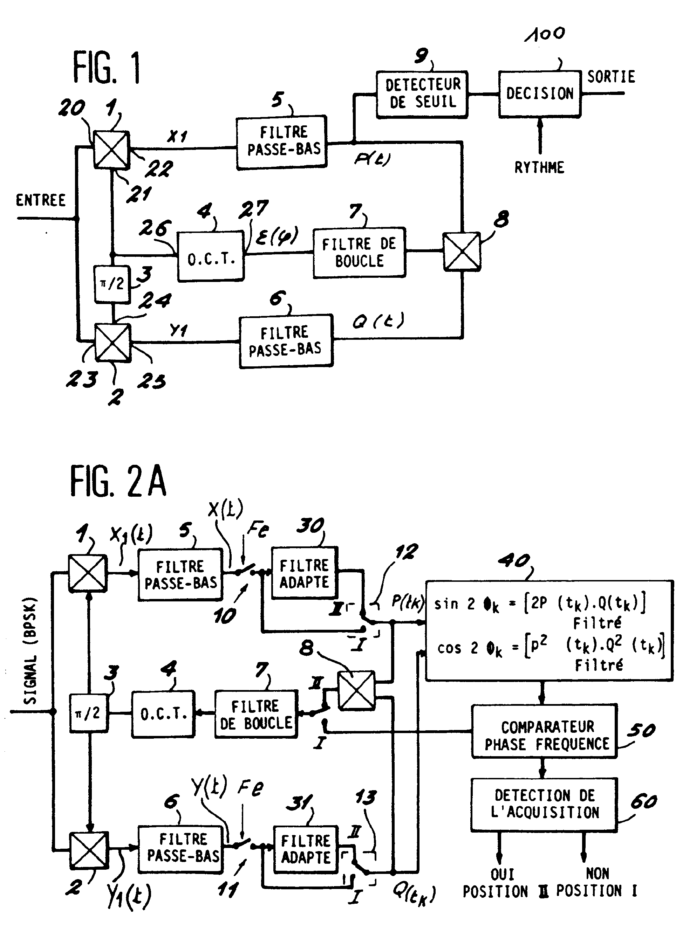

Un dispositif de démodulation cohérente pour des signaux modulés à deux états de phase communément appelé "Boucle de Costas" a été représenté sur la figure 1.

Ce dispositif, tel qu'il est présenté ne permet pas de résoudre les problèmes de faux accrochages en fréquence dans le cas de la modulation de phase à deux états. Cependant, il est possible de détecter de façon élémentaire un faux accrochage en fréquence et de relancer l'acquisition en forçant de manière particulière le signal de commande de l'oscillateur comme indiqué dans la description détaillée ci-desssous.

Le dispositif comprend de manière connue un oscillateur commandable en tension 4 recevant sur une entrée de commande 27 un signal d'erreur ε(Φ) et disposant d'une sortie 26 délivrant une onde dont la phase dépend du signal d'erreur.

Le dispositif comprend encore deux démodulateurs 1, 2. Le premier a deux entrées 20 et 21, recevant respectivement l'onde modulée et l'onde délivrée par l'oscillateur commandé en tension, et a une sortie 22 délivrant un signal X₁. Le second a deux entrées 23 et 24, recevant respectivement l'onde modulée et l'onde délivrée par l'oscillateur commandable en tension préalablement déphasée de 90° par un déphaseur 3, et a une sortie 22 délivrant un signal Y₁.

Un filtre passe-bas 5 est disposé en sortie du démodulateur 1. Ce filtre délivre un signal filtré P(t). De même un filtre passe-bas 6 est disposé en sortie du démodulateur 2, ce filtre délivrant un signal filtré Q(t). Ces filtres sont nécessaires pour supprimer les harmoniques en sortie du démodulateur. Ils peuvent également servir à maximiser le rapport signal à bruit si cela n'a pas été fait à l'aide d'un filtre passe bande placé en amont des deux démodulateurs.

Le dispositif de la figure 1 comprend également un filtre de boucle 7 qui délivre à sa sortie le signal d'erreur ε(Φ), ce filtre recevant à son entrée le signal de sortie d'un multiplieur 8.

Les signaux filtrés P(t) et Q(t) sont appliqués aux deux entrées du multiplieur 8.

L'ensemble forme ainsi une boucle à verrouillage de phase.

Le dispositif comprend en outre un détecteur de seuil 9, suivi d'un dispositif de décision 100, piloté par une horloge non représentée.

Cet ensemble permet de connaître le niveau du signal de sortie du filtre passe-bas et de cette façon de savoir si le verrouillage de phase est correct ou non. En effet, lors d'un verrouillage correct, l'un des deux signaux est pratiquement nul tandis qu'en présence d'un faux accrochage les signaux des voies en phase et quadrature ont une dynamique identique.

Ce système simple a malheureusement l'inconvénient de ne pas pouvoir s'étendre à des modulations à un plus grand nombre d'états et ne donne surtout aucune indication sur le décalage en fréquence, c'est-à-dire sur la direction dans laquelle il faut orienter l'oscillateur local commandé en tension afin qu'il réduise cet écart de fréquence.

Cependant on peut résoudre ce problème en ajoutant en entrée de l'oscillateur local un signal périodique basse fréquence, dit de balayage, que l'on inhibe dès l'instant que le critère énoncé ci-dessus est vérifié.

Malheureusement cette solution peut nécessiter une période entière de signal de balayage qui est, comme il convient de le rappeler, un signal basse fréquence, tant et si bien que le temps d'acquisition peut rester important.

Or le déposant s'est aperçu que ce temps pourrait être substantiellement réduit à condition de pouvoir estimer la direction dans laquelle il faut orienter l'oscillateur commandé en tension.

Il convient de rappeler qu'une deuxième méthode consiste à remarquer qu'en présence d'un faux accrochage le bruit de boucle est plus élevé que lorsque le système est correctement verrouillé. Mais alors le critère de décision est peu fiable car un bruit de boucle important peut être simplement lié à de mauvaises conditions de propagation et donc un fort taux de bruit de boucle n'indique pas forcément un faux accrochage en fréquence. Cette méthode est en conséquence extrêmement critiquable.

Par ailleurs, il est connu de la demande de brevet français déposée le 4 octobre 1983, enregistrée sous le numéro 83 15794 et publiée sous le numéro 2552959, que l'on peut réaliser un dispositif de récupération d'une onde porteuse au moyen d'un démodulateur de Costas auquel on adjoint un comparateur de phase et de fréquence pour des signaux modulés à N états de phase.

Dans ce dispositif, le principe consiste à effectuer un traitement sommaire sur les signaux P(t) et Q(t) des voies en phase et en quadrature du démodulateur de Costas afin d'élaborer, d'une part la tension d'erreur de l'asservissement et, d'autre part, une tension proportionnelle après filtrage au décalage de fréquence. Cette technique permet notamment de réduire considérablement le temps d'acquisition contrairement aux systèmes classiques utilisant un signal de balayage aveugle.

Cependant ce dispositif ne résoud pas en soi le problème des faux accrochages en fréquence particulièrement critiques par exemple dans les systèmes de transmission numérique à faible débit du type IMMARSAT STANDARD C. En effet, dans ce type de transmission des faux accrochages en fréquence peuvent se produire lorsque l'écart entre la fréquence porteuse et la fréquence de l'oscillateur local est un multiple entier de la moitié de la rapidité de modulation R (R = 1/T).

Le dispositif de récupération d'une onde porteuse selon l'invention permet de résoudre ces inconvénients.

La demande de brevet EP-A-072241 (FUJITSU LTD) concerne un dispositif de récupération d'onde porteuse pour des signaux numériques modulés avec une modulation de phase 2ⁿ de type PSK.

Le dispositif décrit comporte une boucle à verrouillage de phase incluant une boucle à commande automatique de fréquence permettant d'éviter les phénomènes de pseudo-accrochages se produisant lorsque le rapport entre la fréquence d'horloge et la fréquence porteuse est faible, ce qui se produit dans les systèmes de communication numérique de faible capacité.

La boucle à commande automatique de fréquence comporte pour cela de façon symétrique deux différentiateurs suivis respectivement par un mélangeur. Les signaux de sortie des mélangeurs sont appliqués à un soustracteur de manière à obtenir un système symétrique pour supprimer le bruit indésiré et obtenir une boucle stable.

Le dispositif décrit dans ce document n'a pas la même structure que le dispositif de l'invention. cette différence de structure se retrouve à la fois dans la fonction réalisée et dans le résultat procuré.

L'invention a donc plus particulièrement pour objet un dispositif de récupération d'une onde porteuse muni d'un moyen d'inhibition de faux accrochages en fréquence pour des signaux modulés en phase à N états de phase N=2^{p}, p étant un entier positif, comprenant une boucle à verrouillage de phase comportant :
- des moyens de démodulation du signal d'entrée modulé délivrant deux signaux X₁(t) et Y₁(t);
- un oscillateur commandable en tension, délivrant une onde sinusoidale;
- un déphaseur de 90° recevant l'onde sinusoidale et l'appliquant aux moyens de démodulation après déphasage ;
- des moyens de filtrage passe-bas des signaux X₁(t) et Y₁(t) délivrant en leurs sorties deux signaux X(t) et Y(t) ;
- un comparateur de phase de type Costas ou un multiplieur dans le cas où p=1; et
- un filtre de boucle, dont la sortie est reliée à l'entrée de l'oscillateur commandable en tension,

caractérisé en ce que cette boucle de verrouillage de phase comporte en outre :
- des moyens d'échantillonnage des signaux filtrés X(t) et Y(t) délivrant en leurs sorties des signaux échantillonnés, à une fréquence d'échantillonnage Fe de période Te telle que Fe > (2^{p+1}|n|)/T, où T est l'inverse de la rapidité de modulation, n étant un nombre entier relatif tel que |n|/2T représente la moitié de la bande de fréquence centrée sur la fréquence de ronde porteuse dans laquelle les faux accrochages en fréquence sont inhibés, le comparateur de phase ou le multiplieur recevant des signaux échantillonnés P(tₖ) et Q(tₖ) qui sont soit les signaux en sortie des moyens d'échantillonnage, soit une version filtrée de ces signaux en cas de détection d'accrochage, et en ce que ledit dispositif comprend également :
- des moyens d'élaboration des signaux nécessaires à l'évaluation du sens de variation de l'erreur de phase , recevant les signaux échantillonnés P(tₖ) et Q(tₖ) qui sont soit les signaux en sortie des moyens d'échantillonnage (10, 11), soit une version filtrée de ces signaux en cas de détection d'accrochage et permettant dans un premier temps d'obtenir les signaux Sin(2φₖ) et Cos(2φₖ) représentatifs de l'erreur de phase φₖ entre l'onde porteuse et l'onde fournie par l'oscillateur à l'instant d'échantillonnage tₖ et dans un deuxième temps, après filtrage de ces deux signaux, leur polarité, c'est-à-dire le signe de Sin(2φₖ) filtré Sign{Sin(2φₖ) filtré} et le signe de Cos(2φₖ) filtré Sign {Cos(2φₖ) filtré};
- un comparateur de phase/fréquence qui reçoit le signal Sign {Sin(2φₖ) filtré} et le signal Sign {Cos(2φₖ) filtré}, ce comparateur permettant de détecter le sens de variation de l'erreur de phase et délivrant un signal d'erreur adéquat au filtre de boucle lorsqu'une perte de synchronisation est détectée, ledit filtre recevant autrement la sortie du comparateur de phase ou du multiplieur ;
- des moyens de détection de l'acquisition permettant, à partir de l'information issue entre autre du comparateur de phase/fréquence, de délivrer un premier signal correspondant à la détection d'accrochage, ou un deuxième signal correspondant à une détection de perte de synchronisation; et
- des moyens de filtrage adaptés insérés dans la boucle à verrouillage de phase après les moyens d'échantillonnage lorsque les moyens de détection d'accrochage ont détecté un accrochage, afin de fournir ladite version filtrée des signaux échantillonés P(tₖ) et Q(tₖ).

Une deuxième caractéristique du dispositif de récupération des moyens de détection du sens de variation de l'erreur de phase comporte :
- une unité arithmétique et logique recevant les signaux en bande de base échantillonnés et délivrant un premier signal Sin(2^{p} Φ ₖ) et un deuxième signal Cos(2^{p} Φₖ), signaux représentatifs de l'erreur de phase Φₖ entre l'onde porteuse et l'onde fournie par l'oscillateur à l'instant d'échantillonnage tₖ,
- un filtre transversal numérique pour chacun des signaux trigonométriques précédents délivrant un signal représentatif du signe des premier et deuxième signaux après filtrage passe-bas.

Selon une autre caractéristique de l'invention, le comparateur de phase/fréquence comprend une bascule de type D recevant sur son entrée D le signal signe du premier signal représentatif de l'erreur de phase et un signal d'horloge sur son entrée d'horloge fourni par une porte logique, laquelle reçoit à ses entrées le deuxième signal représentatif de l'erreur de phase, le signal d'échantillonnage et un signal S_{T} représentant un changement d'état du signal signe du premier signal d'erreur de phase Sin (2^{p} Φₖ ) filtré.

Selon une autre caractéristique de l'invention, les moyens de détection d'accrochage et de perte de synchronisation comportent :
- un compteur dont l'entrée reçoit le signal S_{T} indiquant un changement d'état du signal signe du premier signal d'erreur de phase filtré, validé par le signal signe du deuxième signal d'erreur de phase filtré,
- un comparateur à seuil recevant un signal de sortie du compteur et délivrant un signal de détection d'accrochage lorsque le nombre de changement d'état validé obtenu par le compteur est supérieur au seuil,
- une première porte logique recevant sur ses entrées un signal S_{T} représentant un changement d'état du signal signe du premier signal d'erreur de phase et le signal signe du deuxième signal d'erreur de phase filtré,
- une deuxième porte logique recevant sur ses entrées le signal S_{T} et le signal signe du deuxième signal d'erreur de phase filtré préalablement inversé et délivrant un signal dont une transition d'un état bas à l'état haut un état représente une détection de perte de synchronisation, ce signal étant appliqué à une entrée de remise aux conditions initiales du compteur.

D'autres caractéristiques et avantages de l'invention ressortiront mieux de la description qui va suivre, donnée à titre illustratif mais non limitatif en référence aux dessins annexés dans lesquels :
- la figure 1 représente un dispositif de récupération d'une onde porteuse selon l'art antérieur pour le cas p=1,
- la figure 2A représente un dispositif de récupération d'une onde porteuse selon l'invention également pour p=1,
- la figure 2B représente le même dispositif adapté au cas p quelconque,
- la figure 3 représente les moyens d'élaboration des signaux "signe" du premier et du deuxième signal d'erreur de phase filtrés,
- la figure 4 représente le comparateur de phase/fréquence selon l'invention,
- la figure 5 représente des moyens de détection d'accrochage et de perte de synchronisation.

La figure 2A correspond au schéma d'un dispositif de récupération d'une onde porteuse conforme à l'invention. Dans ce schéma, certains éléments ont la même fonction que les éléments représentés sur la figure 1 de l'art antérieur et portent en conséquence la même référence que ces derniers.

Le dispositif de récupération d'une onde porteuse selon l'invention comporte donc deux démodulateurs 1 et 2, chacun recevant le signal numérique modulé en phase. Ces deux démodulateurs sont reliés à un déphaseur 3 de 90° afin de délivrer les signaux en bande de base en phase et en quadrature. Un premier signal X₁(t) est délivré par le démodulateur 1 et un deuxième signal Y₁(t) est délivré par le démodulateur 2. Le signal X₁(t) est filtré par un filtre passe-bas 5 délivrant le signal X(t), le signal Y₁(t) est filtré par un filtre passe-bas 6 délivrant le signal Y(t). Le dispositif comporte en outre des moyens qui permettent d'effectuer un échantillonnage des signaux en bande de base filtrés, cet échantillonnage se faisant à une fréquence Fe de période Te telle que Te > (2^{p+1}|n|)/T, où T est l'inverse de la rapidité de la modulation et n un nombre entier relatif. Les moyens d'échantillonnage sont constitués par l'échantillonneur 10 de fréquence Fe placé en sortie du filtre passe-bas 5 et par l'échantillonneur 11 de fréquence Fe placé en sortie du filtre passe-bas 6.

Le dispositif comporte en outre un filtre de boucle 7 dont le signal d'entrée est la sortie du multiplieur 8, suivi d'un oscillateur commandable en tension 4, délivrant l'onde sinusoïdale appliquée au démodulateur 1 et au démodulateur 2 après déphasage de 90°.

Le dispositif selon l'invention comporte des moyens d'élaboration des deux signaux nécessaires à l'évaluation du sens de variation de l'erreur de phase 40. Ces moyens reçoivent les signaux échantillonnés P(tₖ) et Q(tₖ) qui sont soit les signaux X(t) et Y(t) échantillonnés, soit une version filtrée de ces signaux, et permettent dans un premier temps d'obtenir les signaux représentatifs de l'erreur de phase Sin(2 Φₖ) et Cos(2 Φ ₖ) et dans un deuxième temps, après filtrage de ces deux signaux, leur polarité, c'est-à-dire le signe de Sin(2 Φ ₖ) filtré et le signe de Cos(2 Φ ₖ) filtré. Ces signaux sont appelés dans la suite
Sign {Sin(2 Φₖ) filtré}
Sign {Cos(2 Φₖ) filtré}

Le dispositif selon l'invention comporte également un comparateur de phase/fréquence 50 qui reçoit le signal Sign {Sin(2 Φ ₖ)}filtré et le signal Sign {Cos(2 Φₖ) filtré}, ce comparateur permettant de détecter le sens de variation de l'erreur de phase et délivrant un signal d'erreur adéquat.

Le dispositif comporte en outre des moyens de détection de l'acquisition 60 permettant, à partir de l'information issue entre autre du comparateur de phase/fréquence, de délivrer un premier signal correspondant à la détection d'accrochage et qui va permettre le basculement des interrupteurs 12 et 13 sur la position II, un deuxième signal correspondant à une détection de perte de synchronisation qui va entraîner un basculement des interrupteurs sur la position I.

Dès que le système est correctement verrouillé, l'on introduit par conséquent un filtrage adapté sur les voies en phase et en quadrature.

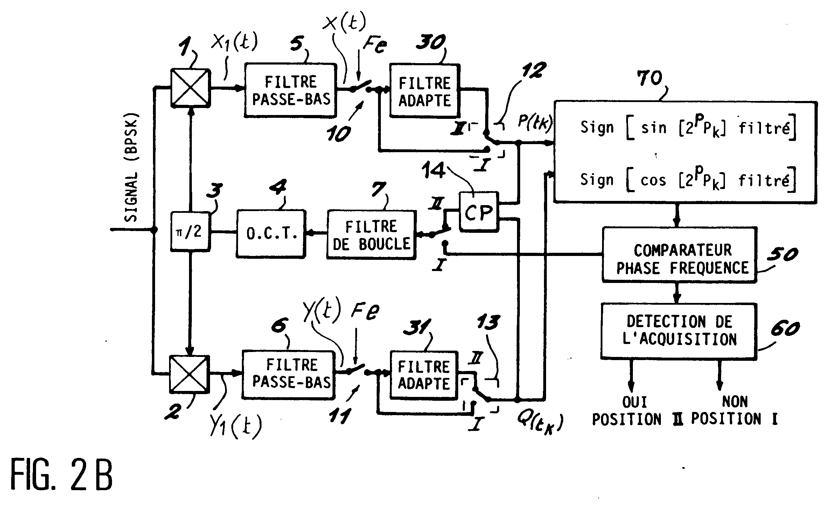

La figure 2B, valable pour le cas général où p est quelconque, ne diffère de la figure 2A que pour deux dispositifs. Le dispositif 70 comporte toujours des moyens d'élaboration des deux signaux nécessaires à l'évaluation du sens de variation de l'erreur de phase. Ces deux signaux sont cette fois le signal Sign {Sin(2^{p} Φₖ) filtré} et Sign {Cos(2^{p} Φₖ) filtré} Leur rôle vis-à-vis des autres dispositifs est identique à ceux des signaux Sign {Sin(2 Φₖ) filtré} et Sign {Cos (2 Φₖ) filtré} du dispositif 40 de la figure 2A.

Le dispositif 14 est un comparateur de phase de type Costas qui remplace le multiplieur 8 de la figure 2A. Il utilise les deux signaux d'entrée P(tₖ) et Q(tₖ) et délivre un signal de sortie fonction de p. Par exemple, pour p=2, le circuit 14 délivre le signal P(tₖ).Q(tₖ). {P²(tₖ) - Q²(tₖ)}.

On va maintenant détailler le fonctionnement du dispositif conforme à l'invention à partir d'un mode de réalisation, donné à titre d'exemple, des dispositifs 70, 50 et 60.

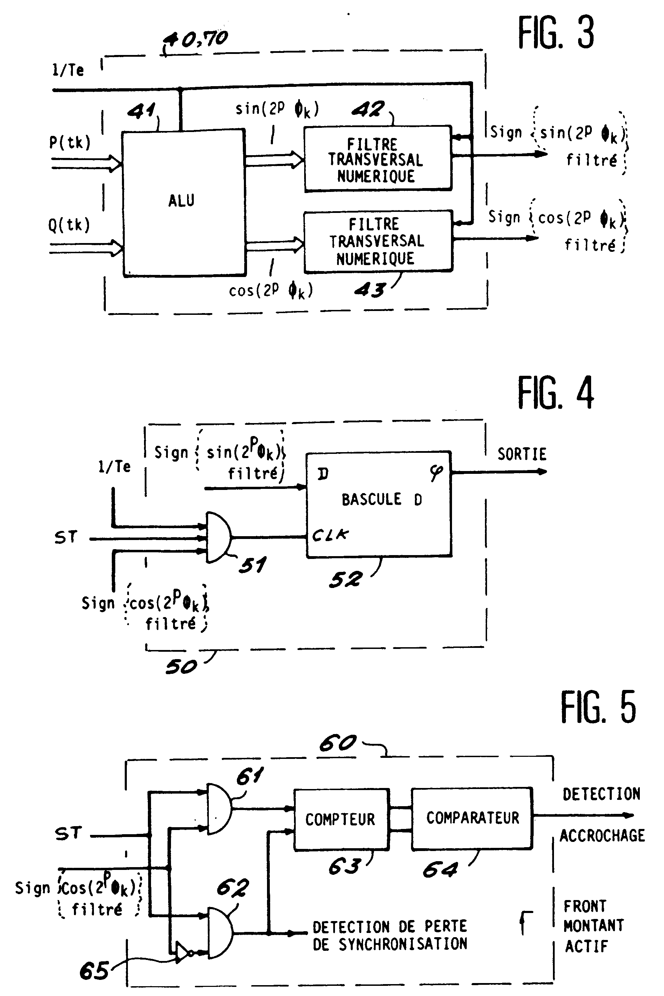

La figure 3 correspond donc à un mode de réalisation particulier du dispositif 70, ce dispositif permettant de délivrer deux signaux nécessaires à la détection du sens de variation de l'erreur de phase.

Le dispositif 70 comporte tout d'abord une unité arithmétique et logique 41 suivie d'un premier filtre transversal numérique 42 qui reçoit le signal Sin(2^{p} Φₖ) et d'un deuxième filtre transversal numérique 43 qui reçoit le signal Cos(2^{p} Φₖ). L'unité arithmétique et logique 41 reçoit les données correspondant au signal échantillonné P(tₖ) et les données correspondant au signal échantillonné Q(tₖ). Cette unité arithmétique et logique permet en fait de délivrer les signaux Sinus et Cosinus de 2^{p} Φₖ. L'unité arithmétique et logique 41 reçoit les mots binaires correspondant aux signaux P(tₖ) et Q(tₖ) à la cadence 1/Te. L'unité 41 est classique en soi et permet donc d'obtenir à la cadence 1/Te les signaux discrets Sin(2^{p} Φₖ) et Cos(2^{p} Φₖ) en suivant, à l'aide des règles de décomposition trigonométrique, leur expression en fonction de Sin( Φₖ) et Cos( Φₖ) où ces dernières quantités sont remplacées respectivement par Q(tₖ) et P(tₖ). Ces signaux sont ensuite filtrés avant que l'information de polarité ne soit extraite. Le filtrage est effectué pour chaque signal à l'aide d'un filtre numérique transversal, respectivement 42 et 43, fonctionnant à cette même cadence 1/Te et dont les valeurs des coefficients permettent d'obtenir une caractéristique passe-bas de sa fonction de transfert. En pratique, un filtre transversal de 17 coefficients s'avère être suffisant.

Seule l'information de polarité des sorties des filtres est utilisée par le comparateur de phase/fréquence. Le filtre 42 délivre donc le signal Sign {Sin(2^{p} Φ ₖ) filtré} et le filtre 43 délivre le signal Sign {Cos(2^{p} Φₖ) filtré}.

La figure 4 représente un exemple de réalisation du comparateur de phase/fréquence.

Le comparateur de phase/fréquence suit le principe exposé dans la demande de brevet déposée le 4 octobre 1983, sous le numéro 83 15794 et publiée sous le numéro 2552959. Toutefois, à la différence de la structure générale décrite dans ce brevet, on peut pour le cas particulier d'une modulation de phase à N états simplifier son implantation en remplaçant les signaux Fx et Fy par le signal de polarité de Cos(N Φₖ) une fois filtré. Ainsi,
- le signal Sign {Sin(2^{p} Φ ₖ) filtré } correspond au signal E du brevet cité,
- le signal Sign {Cos(2^{p} Φₖ) filtré} remplace les signaux Fx et Fy du brevet cité,
- le signal S_{T} est obtenu à partir du signal Sign {Sin(2^{p} Φ ₖ) filtré} de la même façon que ce signal S_{T} est obtenu à partir du signal S dans le brevet cité, c'est à dire, S_{T} est un signal binaire présentant un créneau à chaque transition du signal Sign{Sin(2^{p}Φₖ)filtré}.

Le comparateur de phase/fréquence a donc une structure simplifiée représentée sur cette figure 4. Il comporte une porte logique ET 51 à trois entrées et recevant sur l'une de ses entrées le signal de fréquence 1/Te, sur la deuxième entrée le signal S_{T} et sur la troisième entrée le signal Sign {Cos(2^{p} Φₖ) filtré}. La sortie de cette porte 51 permet d'activer l'entrée d'horloge d'une bascule de type D, portant la référence 52. Cette bascule reçoit sur son entrée D le signal Sign {Sin(2^{p} Φₖ) filtré}. La sortie Q de la bascule donne une indication sur le signe de l'erreur de phase et peut donc être utilisée pour assurer l'oscillateur commandable en tension.

Sur la figure 5 on a représenté un exemple de réalisation du dispositif de détection d'accrochage et de perte de synchronisation référencé 60 sur les figures 2A et 2B.

Ce dispositif comporte un compteur permettant de compter un nombre donné de changements de signes consécutifs du signal Sin(2^{p} Φ ₖ) filtré, le signal Cos(2^{p} Φₖ) filtré restant positif. Le compteur reçoit pour cela à son entrée le signal S_{T} qui n'est validé que lorsque le signal Sign {Cos(2^{p} Φₖ) filtré} est positif. Le compteur est suivi d'un comparateur à seuil 64. Afin de garantir le caractère consécutif des transitions de signe, toute détection d'une transition lorsque le signal Sign {Cos(2^{p} Φₖ) filtré} est négatif réinitialise le compteur 63. Ceci est réalisé par la sortie d'une porte logique ET portant la référence 62 qui reçoit sur l'une de ses entrées le signal S_{T} et sur l'autre le signal Sign {Cos(2^{p} Φₖ) filtré} et inversé dans un inverseur 65.

Le seuil du comparateur à été fixé à huit dans l'application particulière décrite.

Le comparateur 64 permet de délivrer le signal de détection d'accrochage et de commander le basculement des interrupteurs 12 et 13 sur la position II. La sortie de la porte logique 62 permet de délivrer un signal de détection de perte de synchronisation. En effet, la perte de synchronisation est détectée lorsque l'on observe une transition d'état du signal Sign {Sin(2^{p} Φₖ) filtré}, le signal Sign {Cos(2^{p} Φₖ) filtré} étant négatif.

La sortie de cette porte 62 permet de commander le basculement des interrupteurs 12 et 13 sur la position I.

Le choix d'une fréquence d'échantillonnage ayant pour période Te < T/(2^{p+1}|n|) dans le cas d'une modulation à N états de phase, N = 2^{p}, 1/T désignant la rapidité de modulation, permet d'obtenir un suréchantillonnage des signaux P(t) et Q(t) permettant au dispositif décrit de détecter la présence d'un décalage en fréquence et de l'annuler, ce qui résout du même coup les problèmes des faux accrochages en fréquence.

Par ailleurs, le dispositif décrit permet de détecter le verrouillage correct de l'asservissement et cela en tenant compte d'un certain nombre M de changements de signes consécutifs de Sin(2^{p} Φₜ) (respectivement Sin(2^{p} Φₖ) qui ont lieu, alors que Cos(2^{p} Φₜ) (respectivement Cos(2^{p} Φₖ) reste positif pour décider que le système est correctement verrouillé.

Dès cet instant, on introduit le filtrage adapté sur les voies en phase et en quadrature et on utilise alors la boucle de Costas classique.

En effet, le comparateur de phase/fréquence précédemment décrit génère un bruit de phase qui peut ne pas être négligeable, notamment lorsque les débits sont faibles, ce qui est précisément le cas. Ceci est simplement lié au fait que le comparateur fournit en permanence le signal de correction adéquat qui, en première approximation, est pratiquement périodique. Ce signal peut alors engendrer un bruit de phase non négligeable selon la constante de temps du filtre de boucle, alors qu'a contrario, si les débits sont élevés, ce bruit de phase devient rapidement négligeable.

Par ailleurs, le dispositif décrit permet de détecter un éventuel décrochage intempestif et de relancer alors la phase d'acquisition au moyen des interrupteurs 12 et 13 que l'on place en position I à tout moment lorsque le système n'est pas correctement verrouillé.

## Revendications

1. Dispositif de récupération d'une onde porteuse muni d'un moyen d'inhibition de faux accrochages en fréquence pour des signaux modulés en phase à N états de phase N=2^{p}, p étant un entier positif, comprenant une boucle à verrouillage de phase comportant :
- des moyens de démodulation (1, 2) du signal d'entrée modulé délivrant deux signaux X₁(t) et Y₁(t);
- un oscillateur commandable en tension (4) délivrant une onde sinusoidale ;
- un déphaseur (3) de 90° recevant l'onde sinusoidale et l'appliquant aux moyens de démodulation (1,2) après déphasage ;
- des moyens de filtrage (5, 6) passe-bas des signaux X₁(t) et Y₁(t) délivrant en leurs sorties deux signaux X(t) et Y(t) ;
- un comparateur de phase de type Costas (14) ou un multiplieur (8) dans le cas où p=1; et
- un filtre de boucle (7), dont la sortie est reliée à l'entrée de l'oscillateur commandable en tension (14),
caractérisé en ce que cette boucle de verrouillage de phase comporte en outre :
- des moyens d'échantillonnage (10,11) des signaux filtrés X(t) et Y(t) délivrant en leurs sorties des signaux échantillonnés, à une fréquence d'échantillonnage Fe de période Te telle que Fe > (2^{p+1}|n|)/T, où T est l'inverse de la rapidité de modulation, n étant un nombre entier relatif tel que |n|/2T représente la moitié de la bande de fréquence centrée sur la fréquence de l'onde porteuse dans laquelle les faux accrochages en fréquence sont inhibés,
le comparateur de phase (14) ou le multiplieur (8) recevant des signaux échantillonés P(tₖ) et Q(tₖ) qui sont soit les signaux en sortie des moyens d'échantillonnage (10,11), soit une version filtrée de ces signaux en cas de détection d'accrochage,
et en ce que ledit dispositif comprend également :
- des moyens d'élaboration des signaux nécessaires à l'évaluation du sens de variation de l'erreur de phase (40 ; 70), recevant les signaux échantillonnés P(tₖ) et Q(tₖ) qui sont soit les signaux en sortie des moyens d'échantillonnage (10,11), soit une version filtrée de ces signaux en cas de détection d'accrochage et permettant dans un premier temps d'obtenir les signaux Sin(2φₖ) et Cos(2φₖ) représentatifs de l'erreur de phase φₖ entre l'onde porteuse et l'onde fournie par l'oscillateur à l'instant d'échantillonnage tₖ et dans un deuxième temps, après filtrage de ces deux signaux, leur polarité, c'est-à-dire le signe de Sin(2φₖ) filtré Sign {Sin(2φₖ) filtré} et le signe de Cos(2φₖ) filtré Sign {Cos(2φₖ) filtré};
- un comparateur de phase/fréquence (50) qui reçoit le signal Sign {Sin(2φₖ) filtré} et le signal Sign {Cos(2φₖ) filtré}, ce comparateur permettant de détecter le sens de variation de l'erreur de phase et délivrant un signal d'erreur adéquat au filtre de boucle (7) lorsqu'une perte de synchronisation est détectée, ledit filtre (7) recevant autrement la sortie du comparateur de phase (14) ou du multiplieur (8) ;
- des moyens de détection de l'acquisition (60) permettant, à partir de l'information issue entre autre du comparateur de phase/fréquence (50), de délivrer un premier signal (II) correspondant à la détection d'accrochage, ou un deuxième signal (I) correspondant à une détection de perte de synchronisation; et
- des moyens de filtrage adaptés (30, 31) insérés dans la boucle à verrouillage de phase après les moyens d'échantillonnage (10, 11) lorsque les moyens de détection d'accrochage (60) ont détecté un accrochage, afin de fournir ladite version filtrée des signaux échantillonés P(tₖ) et Q(tₖ).

2. Dispositif de récupération d'une onde porteuse selon la revendication 1, caractérisé en ce que les moyens (40;70) d'élaboration des signaux nécessaires à la détection du sens de variation de l'erreur de phase comportent :
- une unité arithmétique et logique (41) recevant les signaux échantillonnés P(tₖ) et Q(tₖ) et délivrant un premier Sin(2^{P}φₖ) et un deuxième Cos(2^{P}φₖ) signaux représentatifs de l'erreur de phase entre l'onde porteuse et l'onde en sortie de l'oscillateur commandable en tension,
- un filtre transversal numérique (42,43) pour chacun des signaux représentatifs de l'erreur de phase délivrant un signal représentatif du signe des premier et deuxième signaux après filtrage.

3. Dispositif de récupération d'une onde porteuse selon la revendication 1 ou 2, caractérisé en ce que le comparateur phase/fréquence (50) comprend une bascule de type D (52) recevant sur son entrée D le signal signe du premier signal représentatif de l'erreur de phase filtré et un signal d'horloge sur son entrée d'horloge fourni par une porte logique ET (51), laquelle reçoit à ses entrées le signal signe du deuxième signal représentatif de l'erreur de phase filtré, le signal d'échantillonnage et un signal (S_{T}) représentant un changement d'état du signal signe du premier signal d'erreur de phase filtré.

4. Dispositif de récupération d'une onde porteuse selon l'une quelconque des revendications 1 à 3, caractérisé en ce que les moyens de détection d'accrochage et de perte de synchronisation (60) comportent :
- un compteur (63) dont l'entrée reçoit le signal (S_{T}) indiquant un changement d'état du signal signe du premier signal d'erreur de phase filtré, validé par le signal signe du deuxième signal d'erreur de phase filtré,
- un comparateur à seuil (64) recevant le signal de sortie du compteur et délivrant un signal de détection d'accrochage lorsque le nombre de changements d'états validés obtenus par le compteur est supérieur au seuil,
- une première porte logique (61) recevant sur ses entrées un signal (S_{T}) représentant un changement d'état du signal signe du premier signal d'erreur de phase filtré Sign {Sin(2^{P}φₖ) filtré} et le signal signe du deuxième signal d'erreur de phase filtré Sign {Cos(2^{P}φₖ) filtré},
- une deuxième porte logique (62) recevant sur ses entrées le signal représentant un changement d'état du signal signe du premier signal d'erreur de phase filtré (S_{T}) et le deuxième signal d'erreur de phase Sign {Cos(2^{P}φₖ) filtré} préalablement inversé et qui délivre un signal dont un état représente une détection de perte de synchronisation, ce signal étant appliqué à une entrée de remise aux conditions initiales du compteur (63).

## Claims

1. Device for the recovery of a carrier wave equipped with a dummy frequency lock-up inhibition means for phase-modulated signals with N phase states N=2^{p}, p being a positive integer, comprising a phase locked loop having:
- means (1,2) for demodulating the modulated input signal supplying two signals X₁ (t) and Y₁ (t);
- a voltage-controllable oscillator (4) supplying a sinusoidal wave;
- a 90° phase shifter (3) receiving the sinusoidal wave and applying it to the demodulation means (1,2) following the phase shift;
- low-pass filtering means (5,6) for the signals X₁ (t) and Y₁ (t) supplying at their outputs two signals X(t) and Y(t);
- a Costas-type phase comparator (14) or a multiplier (8) in the case where p = 1; and
- a loop filter (7), whose output is connected to the voltage-controllable oscillator (4) input,
characterized in that said phase locked loop also comprises:
- means (10,11) for sampling the filtered signals X(t) and Y(t) supplying at their outputs sampled signals at a sampling frequency Fe of period Te such that Fe>(2^{p+1}|n|)T, in which T is the inverse of the modulation speed, n being a relative integer such that |n|/2T represents half the frequency band centred on the frequency of the carrier wave in which dummy frequency lock-ups are inhibited, the phase comparator (14) or the multiplier (8) receiving sampled signals P(tₖ) and Q(tₖ), which are either output signals of the sampling means (10,11), or a filtered version of said signals in the case of lock-up detection,
said device also comprising:
- means for processing the signals necessary for the evaluation of the variation direction of the phase error (40,70), receiving the sampled signals P(tₖ) and Q(tₖ), which are the output signals of the sampling means (10,11), or a filtered version of said signals in the case of lock-up detection and permitting initially the obtaining of the signals sin(2φₖ) and cos(2φₖ) representative of the phase error φₖ between the carrier wave and the wave supplied by the oscillator at the sampling time tₖ and secondly, after filtering these two signals, their polarity, i.e. the sign of sin(2φₖ ) filtered sign{sin(2φₖ)filtered} and the sign of cos(2φₖ )filtered sign{cos(2φₖ )filtered};
- a phase/frequency comparator (50), which receives the signal sign{[sin(2ₖ)filtered} and the signal sign{cos(2φₖ)filtered}, said comparator making it possible to detect the variation direction of the phase error and supplying an adequate error signal to the loop filter (7) when a synchronization loss is detected, said filter (7) also receiving the output of the phase comparator (14) or multiplier (8);
- means (60) for the detection of the acquisition making it possible, from the information obtained inter alia from the phase/frequency comparator (50), to supply a first signal (II) corresponding to the lock-up detection, or a second signal (I) corresponding to a synchronization loss detection and
- matched filtering means (30,31) inserted in the phase locked loop following the sampling means (10,11) when the lock-up detection means (60) have detected a lock-up, so as to supply the filtered version of the sampled signals P(tₖ) and Q(tₖ).

2. Device for the recovery of a carrier wave according to claim 1, characterized in that the means (40,70) for the processing of the signals necessary for the detection of the variation direction of the phase error comprise:
- an arithmetic and logic unit (41) receiving the sampled signals P(tₖ) and Q(tₖ) and supplying a first sin(2^{p}φₖ) and a second cos(2^{p}φₖ) signals representative of the phase error between the carrier wave and the wave at the output of the voltage controllable oscillator,
- a digital transverse filter (42,43) for each of the signals representative of the phase error supplying a signal representative of the sign of the first and second signals after filtering.

3. Device for the recovery of a carrier wave according to claim 1 or 2, characterized in that the phase/frequency comparator (50) comprises a D-type flip-flop (52) receiving on its D input the sign signal of the first signal representing the filtered phase error and a clock signal on its clock input supplied by a logic AND gate (51), which receives at its inputs the sign signal of the second signal representative of the filtered phase error, the sampling signal and a signal (S_{T}) representative of a change of state of the sign signal of the first filtered phase error signal.

4. Device for the recovery of a carrier wave according to any one of the claims 1 to 3, characterized in that the synchronization loss and lock-up detection means (60) comprise
- a counter (63), whose input receives the signal (S_{T}) indicating a change of state of the sign signal of the first filtered phase error signal validated by the sign signal of the second filtered phase error signal,
- a threshold comparator (64) receiving the output signal from the counter and supplying a lock-up detection signal when the number of validated state changes obtained by the counter exceeds the threshold,
- a first logic gate (61) receiving on its inputs a signal (S_{T}) representing a state change of the sign signal of the first filtered phase error signal sign{sin(2^{p}φₖ)filtered} and the sign signal of the second filtered phase error signal sign {cos(2^{p}φₖ)filtered},
- a second logic gate (62) receiving on its inputs the signal (S_{T}) representing a change of state of the sign signal of the first filtered phase error signal and the second phase error signal sign {cos(2^{p}φₖ)filtered} previously reversed and which supplies a signal, whereof one state represents a synchronization loss detection, said signal being applied to an input for resetting to the initial conditions of the counter (63).

## Patentansprüche

1. Einrichtung zur Trägerwellenrückgewinnung, die mit einem Mittel zum Verhindern einer falschen Frequenzverriegelung für die phasenmodulierten signale mit N Phasenzuständen N=2^{p}, mit p einer ganzen, positiven Zahl, versehen ist, umfassend eine Phasenverriegelungsschleife, die umfaßt:
- zwei Demodulationseinrichtungen (1, 2) des modulierten Eingangssignals, die zwei Signale X₁ (t) und Y₁(t) liefern;
- einen spannungsgeregelten Oszillator (4), der eine Sinuswelle liefert;
- einen ruhenden Phasenschieber (3) von 90°, der die Sinuswelle erhält und sie auf die zwei Demodulationseinrichtungen (1, 2) nach der Phasenverschiebung anwendet;
- Tiefpaßfiltereinrichtungen (5, 6) der Signale X₁(t) und Y₁(t), die an ihren Ausgängen zwei Signale X(t) und Y(t) liefern;
- einen Phasenkomparator vom Typ Costas (14) oder eine Multiplikationseinrichtung (8) in dem Fall, wo p=1; und
- ein Schleifenfilter (7), dessen Ausgang mit dem Eingang des spannungsgeregelten Oszillators (14) verbunden ist,
**dadurch gekennzeichnet**, daß diese Phasenverriegelungsschleife ferner umfaßt:
- Signal-Abtasteinrichtungen (10, 11) der gefilterten Signale X(t) und Y(t), die an ihren Ausgängen Abtastsignale mit einer Signalabtastfrequenz Fe der Periode Te derart liefern, daß Fe > (2^{p+1}|n|)/T ist, wo T das Inverse der Modulationsgeschwindigkeit ist, n eine solche ganze Zahl in Bezug darauf ist, daß |n|/2T die Hälfte des Frequenzbandes darstellt, das auf die Frequenz der Trägerwelle zentriert ist, bei der die falschen Frequenzverriegelungen verhindert sind,
der Phasenkomparator (14) oder die Multiplikationseinrichtung (8) Abtastsignale P(tₖ) und Q(tₖ) empfangen, die entweder die Signale am Ausgang der Abtasteinrichtungen (10, 11) oder eine gefilterte Version dieser Signale im Fall des Erfassens einer Verriegelung sind,
daß die genannte Vorrichtung ebenfalls umfaßt:
- Signalverarbeitungseinrichtungen, die zum Berechnen der Änderungsrichtung des Phasenfehlers (40; 70) notwendig sind, die die Abtastsignale P(tₖ) und Q(tₖ) erhalten, die entweder die Signale am Ausgang der Abtasteinrichtungen (10, 11) oder eine gefilterte Version dieser Signale im Fall des Erfassens einer Verriegelung sind und in einer ersten Zeit erlauben, die Signale Sin(2Φₖ) und Cos(2Φₖ)zu erhalten, die für den Phasenfehler Φₖ zwischen der Trägerwelle und der von dem Oszillator zum Zeitpunkt der Abtastung tₖ gelieferten Welle representativ sind, und in einer zweiten Zeit nach dem Filtern dieser zwei Signale ihre Polarität, d.h. das Vorzeichen des gefilterten Sin(2Φₖ) Sign {gefilterter Sin(2Φₖ)} und das Vorzeichen des gefilterten Cos(2Φₖ) Sign {gefilterter Cos(2Φₖ)};
- einen Phasen-Frequenzkomparator (50), der das Signal Sign {gefilterter Sin(2(Φₖ)} und das Signal Sign {gefilterter Cos(2Φₖ)} erhält, wobei dieser Komparator ermöglicht, die Richtung der Änderung des Phasenfehlers zu erfassen und ein adäquates Fehlersignal an die Filterschleife (7) liefert, wenn ein Synchronisationsverlust erfaßt worden ist, wobei das Filter (7) sonst den Ausgang des Phasenkomparators (14) oder der Multiplikationseinrichtung (8) erhält;
- Bestimmungsmittel für die Erfassung (60), die gestatten, auf der Grundlage von unter anderem von dem Phasen-Frequenz-Komparator (50) ausgegebener Information ein erstes Signal (II) zu liefern, das der Verriegelungsbestimmung entspricht, oder ein zweites Signal (I), das einer Bestimmung des Synchronisationsverlusts entspricht; und
- angepaßte Filtermittel (30, 31), die in die Phasenverriegelungsschleife nach den Atasteinrichtungen (10, 11) eingeschaltet sind, wenn die Verriegelungsbestimmungsmittel (60) eine Verriegelung erfaßt haben, um die genannte gefilterte Version der Abtastsignale P(tₖ) und Q(tₖ) zu liefern.

2. Rückgewinnungsvorrichtung für eine Trägerwelle gemäß An spruch 1, **dadurch gekennzeichnet**, daß die Signalverarbeitungseinrichtungen (40, 70), die für die Erfassung der Änderungsrichtung des Phasenfehlers notwendig sind, umfassen:
- eine arithmetische und logische Einheit (41), die die Abtastsignale P(tₖ) und Q(tₖ) erhält und ein erstes Signal Sin(2^{P}Φₖ) und ein zweites Signal Cos(2^{P}Φₖ) liefert, die für den Phasenfehler zwischen der Trägerwelle und der Welle am Ausgang des spannungsgeregelten Oszillators repräsentativ sind,
- ein transversales, digitales Filter (42, 43) für jedes der für den Phasenfehler repräsentativen Signale, das ein Signal liefert, das für das Vorzeichen des ersten und zweiten Signals nach der Filterung repräsentativ ist.

3. Rückgewinnungsvorrichtung für eine Trägerwelle gemaß Anspruch 1 oder 2, **dadurch gekennzeichnet**, daß der Phasen-Frequenz-Komparator (50) ein Flip-Flop vom Typ D (52) umfaßt, das an seinem Eingang D das Vorzeichensignal des ersten signals, das für den gefilterten Phasenfehler repräsentativ ist, und ein Taktsignal an seinem Takteinang erhält, das von einer logischen UND-Torschaltung (51) geliefert wird, die an ihren Eingängen das Vorzeichensignal des zweiten Signals, das für den gefilterten Phasenfehler repräsentativ ist, das Abtastsignal und ein Signal (S_{T}) erhält, das eine Zustandsänderung des Vorzeichensignals des ersten gefilerten Phasenfehlersignals darstellt.

4. Rückgewinnungseinrichtung für eine Trägerwelle gemäß irgendeinem der Ansprüche 1 bis 3, **dadurch gekennzeichnet**, daß die Bestimmungsmittel für die Verriegelung und den Synchronisationsverlust (60) umfassen:
- einen Zähler (63) dessen Eingang das Signal (S_{T}) erhält, das eine Zustandsänderung des Vorzeichensignals des ersten gefilterten Phasenfehlersignals erhält, das durch das Vorzeichensignal des zweiten gefilterten Phasenfehlersignals gültig gemacht worden ist,
- einen Schwellenkomparator (64), der das Ausgangssignal des Zählers erhält und ein Verriegelungsbestimmungssignal liefert, wenn die Anzahl der gültig gemachten Zustandsänderungen, die von dem Zähler erhalten werden, größer als die Schwelle sind,
- eine erste logische Torschaltung (61), die an ihren Eingängen ein Signal (S_{T}) erhält, das eine Zustandsänderung des Vorzeichensignals des ersten gefilterten Phasenfehlersignals Sign {Sin(2^{P}φₖ) gefiltert) und das Vorzeichensignal des zweiten gefilterten Phasenfehlersignals Sign {Cos(2^{P}φₖ) gefiltert} erhält,
- eine zweite, logische Torschaltung (62), die an ihren Eingängen das Signal (S_{T}), das eine Zustandsänderung des Vorzeichensignals des ersten, gefilterten Phasenfehlersignals darstellt, und das zweite Phasenfehlersignal Sign {Cos(2^{P}φₖ) gefiltert} erhält, das vorhergehend invertiert worden ist, und die ein Signal liefert, dessen Zustand eine Bestimmung des Synchronisationsverlusts darstellt, wobei dieses Signal an einen Rücksetzeingang für die Anfangsbedingungen des Zählers (63) angelegt wird.
